(19) Europäisches Patentamt
European Patent Office
Office européen des brevets

(11) **EP 4 042 113 B1**

(12) **FASCICULE DE BREVET EUROPEEN**

(45) Date de publication et mention
de la délivrance du brevet:
**06.12.2023 Bulletin 2023/49**

(21) Numéro de dépôt: **20785520.6**

(22) Date de dépôt: **07.10.2020**

(51) Classification Internationale des Brevets (IPC):
**G01D 5/244** *(2006.01)* **G01D 5/245** *(2006.01)*
**G01D 5/246** *(2006.01)* **G01P 13/04** *(2006.01)*
**G01P 3/487** *(2006.01)*

(52) Classification Coopérative des Brevets (CPC):
**G01D 5/2457; G01D 5/24476; G01P 13/045;**
G01D 5/246; G01P 3/487

(86) Numéro de dépôt international:
**PCT/EP2020/078148**

(87) Numéro de publication internationale:
**WO 2021/069510 (15.04.2021 Gazette 2021/15)**

(54) **PROCEDE DE DETECTION D'UNE POSITION ANGULAIRE ABSOLUE OU D'UNE COURSE DE DEPLACEMENT ANGULAIRE ABSOLUE D'UN ORGANE TOURNANT**

VERFAHREN ZUR ERKENNUNG EINER ABSOLUTEN WINKELPOSITION ODER EINES ABSOLUTEN WINKELVERLAGERUNGSHUBES EINES DREHENDEN ORGANS

METHOD OF DETECTION OF AN ABSOLUTE ANGULAR POSITION OR OF AN ABSOLUTE ANGULAR DISPLACEMENT STROKE OF A ROTATING ORGAN

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorité: **08.10.2019 FR 1911165**

(43) Date de publication de la demande:
**17.08.2022 Bulletin 2022/33**

(73) Titulaire: **Robert Bosch Automotive Steering
Vendôme
41100 Vendome (FR)**

(72) Inventeur: **BOUSSEMART, Franck
41100 SAINT ANNE (FR)**

(74) Mandataire: **Bee, Joachim
Robert Bosch GmbH
Zentralabteilung Patente
Postfach 30 02 20
70442 Stuttgart (DE)**

(56) Documents cités:
**DE-A1- 10 017 542 DE-C1- 19 835 091
GB-A- 2 065 310**

EP 4 042 113 B1

## Description

## DOMAINE TECHNIQUE DE L'INVENTION

L'invention se rapporte à un dispositif de mesure comportant un codeur annulaire multipolaire à N paires de pôles fixé à un organe tournant par rapport à un organe de référence et un capteur fixé à l'organe de référence, chaque paire de pôle comportant un pôle de type Nord et un pôle de type Sud, les N paires de pôles formant sur un tour une alternance de pôles de type Nord et de pôles de type Sud, l'alternance de pôles de type Nord et de pôles de type Sud n'étant pas angulairement équirépartie. Elle se rapporte également à utilisation d'un tel dispositif pour détecter des courses angulaires absolues de l'organe tournant par rapport à l'organe de référence.

## ÉTAT DE LA TECHNIQUE ANTÉRIEURE

Pour déterminer la vitesse, la course de déplacement ou la position angulaire d'un organe tournant par rapport à un organe de référence autour d'un axe de révolution, il est connu d'équiper l'organe tournant d'un codeur annulaire et d'équiper l'organe de référence d'un capteur disposé en regard du codeur, pour lire des informations portées par le codeur au cours de la rotation de l'organe tournant.

Communément, le codeur comporte au moins une première piste de lecture qu'on dira dans la suite multipolaire, constituées d'une alternance de pôles de type Nord et de pôles de type Sud équirépartis à la périphérie du codeur. Il peut s'agir d'un codeur magnétique, mais également d'un codeur optique, les pôles de type Nord et de type Sud se distinguant alors par des propriétés optiques (couleur, réflectivité) différentes, ou de ce qu'on appelle communément une roue phonique, à savoir une roue dentée dont les alternances de dents et de créneaux sont détectables par un capteur à effet Hall. Dans toutes les configurations, le capteur détecte les transitions entre les pôles Nord et Sud successifs lors des révolutions de l'organe tournant, et un compteur permet d'en déduire un angle de rotation relative entre l'organe tournant et l'organe de référence, pour autant que le sens de rotation soit connu. Associé à une horloge, un tel compteur permet également de mesurer des vitesses de rotation. Ces mesures seront d'autant plus précises que le nombre de pôles sera élevé et l'horloge de haute résolution.

Après calibration et détermination d'une origine pour le comptage des angles, la donnée de la direction de rotation et le comptage des transitions permettent de calculer une position angulaire absolue ou un déplacement angulaire absolu de l'organe tournant par rapport à l'organe de référence, avec une résolution angulaire correspondant au pas entre deux pôles successifs du codeur.

En pratique, ce type de dispositif de mesure est notamment utilisé pour instrumenter des ensembles mécaniques comportant un moteur d'entraînement de l'organe tournant par rapport à l'organe fixe, et une commande moteur qui donne des ordres de marche et d'arrêt du moteur, les ordres de marche comportant le cas échéant une information de sens de rotation qui peut être extraite et mise à profit pour le comptage des transitions qui, suivant le sens de rotation, incrémentent ou décrémentent le compteur.

Pour limiter la consommation énergétique, un tel dispositif de mesure est habituellement mis hors service lorsque l'organe tournant est à l'arrêt. La mise en service du dispositif de mesure est alors déclenchée par la commande moteur.

Il s'ensuit qu'il existe des périodes durant lesquelles le dispositif de mesure est aveugle, au sens où il n'est pas en mesure de détecter d'éventuelles variations de position angulaire de l'organe tournant alors que le moteur est à l'arrêt. De telles variations peuvent notamment être induites par des relâchements de contraintes internes ou des micro-déplacement de l'organe tournant à l'arrêt.

Il peut alors s'avérer que le capteur, au moment de son réveil, ne se trouve pas en regard du même pôle du codeur que lors de sa mise en sommeil. Cet état de fait peut le cas échéant être détecté, par exemple si le pôle au réveil est de polarité différente du pôle de mise en sommeil et si le capteur est en mesure de lire non seulement les transitions entre pôles mais également la nature des pôles. Mais même en pareille circonstance, il n'est possible de déterminer ni le sens ni l'amplitude du déplacement de l'organe tournant pendant la période de sommeil du capteur.

Naturellement, il est possible d'ajouter un deuxième codeur annulaire, porteur d'une singularité et lue par un deuxième capteur, pour recaler à chaque tour les informations données par le codeur multipolaire. Mais un tel système est plus complexe et potentiellement plus consommateur d'énergie.

Pour pallier les inexactitudes et imprécisions des mesures liées aux tolérances de fabrication du codeur, il a été proposé dans le document DE 198 35 091 C1 de corriger les calculs d'angles de rotation déduits des détections de transition en fonction de valeurs caractéristiques préalablement déterminées lors d'une procédure d'étalonnage du codeur.

Dans le document DE 100 17 542 A1 a été proposé un dispositif de détermination de la position d'un organe tournant qui met en oeuvre un codeur multipolaire spécifique dont la répartition des pôles n'est pas régulière. Plus précisément, le codeur multipolaire est constitué d'une pluralité de paires de pôles, chaque paire de pôles ayant une longueur égale aux autres paires de pôles, mais l'une au moins de paires de pôles ayant de pôles de longueurs différentes. En mesurant les temps s'écoulant entre des transitions successives du codeur passant devant un capteur, et avec la connaissance préalable des longueurs de pôles, on est en mesure de déterminer la direction et la vitesse angulaire ainsi quet la position angulaire absolue.

## EXPOSÉ DE L'INVENTION

L'invention vise à remédier aux inconvénients de l'état de la technique et à proposer des moyens simples et peu consommateurs d'énergie ou de temps de calcul, pour détecter et/ou corriger des erreurs dans la détermination d'une position angulaire absolue ou d'une course de déplacement angulaire absolue d'un organe tournant par rapport à un organe de référence.

Pour ce faire est proposé, selon un premier aspect de l'invention, un procédé de détection d'une position angulaire absolue ou d'une course de déplacement angulaire absolue d'un organe tournant par rapport à un organe de référence autour d'un axe de révolution, à l'aide d'un dispositif de mesure comportant un codeur annulaire multipolaire à N paires de pôles fixé à l'organe tournant et un capteur fixe par rapport à l'organe de référence, chaque paire de pôle comportant un pôle de type Nord et un pôle de type Sud, les N paires de pôles formant sur un tour une alternance de pôles de type Nord et de type Sud, l'alternance de pôles n'étant pas distribuée de façon régulière autour de l'axe de révolution, le procédé comportant une détection par le capteur d'une suite de transitions successives caractéristiques chacune d'un passage des pôles de l'alternance de pôles devant le capteur, le procédé étant caractérisé en ce qu'il comporte les opérations suivantes :

- une détermination de plusieurs durées de révolution complète glissantes associées chacune à une transition extraite de la suite de transitions successives et égales chacune au temps séparant la transition extraite d'une transition d'ordre 2N précédente de la suite de transitions successives, et d'une durée de révolution complète estimée, fonction d'une ou plusieurs des durées de révolution complète glissantes,

- pour plusieurs transitions de la suite de transitions successives, dites chacune transition testée, et de préférence pour toutes les transitions de la suite de transitions successives, une détermination d'au moins une durée caractéristique de la transition testée, égale au temps séparant la transition testée d'une autre transition de la suite de transition successives, l'autre transition étant immédiatement adjacente à la transition testée dans la suite de transitions successives ou séparée de la transition testée par un nombre prédéterminé Q de transitions successives de la suite de transition successives, Q étant compris entre 1 et 2N-2,

- un calcul pour chaque transition testée d'un angle caractéristique de la transition testée, proportionnel à un ratio entre la durée caractéristique de la transition testée et la durée de révolution complète estimée.

Le procédé peut tirer parti d'une imperfection constatée d'un codeur multipolaire conçu pour présenter une symétrie de révolution d'ordre 2N, mais dont l'alternance de pôles de type Nord et de pôles de type Sud s'avère imparfaitement équirépartie, ou mettre en oeuvre un codeur volontairement conçu pour présenter au moins une transition entre deux pôles successifs dont le positionnement est spécifique.

La transition d'indexation pourra être par exemple celle dont la distance angulaire à l'une des transitions directement voisines est la plus petite, ou la plus grande. Dans cette hypothèse, la durée caractéristique de la transition testée pourra être la durée la séparant de la transition la précédant ou la suivant directement (c'est-à-dire sans transition intermédiaire, Q=0) dans la suite des transitions détectées.

La transition d'indexation pourra le cas échéant être caractérisée par une signature angulaire plus complexe, par rapport à une ou plusieurs autres transitions : on pourra par exemple repérer la transition d'indexation par deux angles caractéristiques la séparant de deux autres transitions situées de part et d'autre de la transition d'indexation et directement adjacentes (Q=0) ou non (Q>0).

La durée de révolution complète permet une estimation d'une grandeur proportionnelle à l'inverse de la vitesse moyenne de révolution par tour, qui est insensible à l'irrégularité dans la distribution angulaire des pôles. En rapportant la durée caractéristique de la transition testée à la durée d'une révolution complète, on détermine une mesure angulaire indépendante de la vitesse de révolution de l'organe tournant. On peut envisager différentes manières de déterminer la durée de révolution complète estimée :

- Suivant une mode de réalisation, la durée de révolution complète estimée est égale soit à la durée de révolution complète glissante associée à la transition testée à l'autre transition ou à une quelconque transition entre la transition testée et l'autre transition,

- Suivant un autre mode de réalisation, la durée de révolution complète estimée est égale à une moyenne calculée à partir d'au moins certaines des durées de révolution complète glissantes, de préférence une moyenne calculée à partir de plusieurs durées parmi les durées suivantes : la durée de révolution complète glissante associée à la transition testée, la durée de révolution complète glissante associée à l'autre transition, et le cas échéant une ou plusieurs durées de révolution complète glissante associées à une ou plusieurs transitions séparant la transition testée de l'autre transition.

Suivant un mode de réalisation, on procède à une comparaison de l'angle caractéristique de la transition testée avec un angle spécifique d'indexation préalablement mémorisé ou avec un ou plusieurs autres angles caractéristiques d'une ou plusieurs autres transitions testées pour déterminer si la transition testée correspond à une transition d'indexation prédéterminée unique caractéristique de la distribution irrégulière de l'alternance de pôles autour de l'axe de révolution.

Dans la mesure où la signature de la transition d'indexation est unique, on pourra déterminer si la transition testée correspond à la transition d'indexation en comparant l'angle caractéristique de la transition testée aux angles caractéristiques de toutes les autres transitions.

Alternativement, et dans la mesure où le ratio calculé entre la durée caractéristique de la transition testée et la durée de révolution complète glissante associée à la transition testée délivre un résultat qui est un angle caractéristique de la transition testée, on pourra déterminer si la transition testée correspond à la transition d'indexation en comparant l'angle caractéristique de la transition testée à une valeur prédéterminée, gardée en mémoire et caractéristique de l'angle spécifique d'indexation.

Suivant un mode de réalisation, on prévoit les opérations suivantes :

- lors de la détection par le capteur de transitions successives caractéristiques des passages des pôles de l'alternance de pôle devant le capteur, incrémentation ou décrémentation d'au moins un compteur de transitions en fonction des transitions détectées et, le cas échéant, d'une direction de rotation donnée de l'organe tournant.

- lorsque la transition testée correspond à la transition d'indexation, lecture d'une valeur courante du compteur de transitions, et écriture dans le compteur de transitions d'une valeur de remplacement fonction de la valeur courante et d'un numéro d'indexation spécifique de la transition d'indexation.

Le compteur de transition livre à chaque instant une information sur la course angulaire parcourue par l'organe tournant, et une information sur la position angulaire absolue de l'organe tournant. Cette information peut le cas échéant être entachée d'erreur, notamment si l'organe tournant a changé de position alors que le capteur était en veille. La reconnaissance de la transition indexée permet de corriger la valeur du compteur. La valeur de remplacement est fonction à la fois de la valeur courante du compteur, qui livre une information sur le nombre de tours de la course angulaire, et du numéro d'indexation spécifique de la transition d'indexation, qui précise le positionnement angulaire exacte de l'organe tournant.

En pratique, l'entraînement de l'organe tournant est réalisé par un moteur ou un motoréducteur, notamment un moteur électrique. Lorsque l'entraînement de l'organe tournant est bidirectionnel, on peut connaître la direction de rotation de l'organe tournant en déterminant la direction de l'ordre de commande du moteur, par exemple la polarité d'un courant d'alimentation du moteur. Suivant un mode de réalisation, on procède à une détection d'un ordre de mise en rotation de l'organe tournant dans une direction de rotation donnée, et à une mémorisation de la direction de rotation donnée.

En pratique, les erreurs que l'on anticipe sont notamment des erreurs de très faibles amplitude, consécutives à des relâchements de contraintes internes dans l'organe tournant lorsque le moteur d'entraînement s'arrête et que le capteur est mis en veille. On constate que l'amplitude de telles erreurs peut amener à un décalage d'un pôle entre le dernier pôle vu par le capteur avant la mise en veille et le premier pôle vu par le capteur lors du réveil. Pour cette raison, on peut prévoir, lorsque le capteur est apte à détecter le type d'un pôle de l'alternance de pôles en regard duquel se trouve le capteur, les opérations suivantes :

- lors d'un arrêt de l'organe tournant, mémorisation du dernier type de pôle détecté et de la valeur courante du compteur de transitions ;

- lors d'une reprise de rotation de l'organe tournant, lecture du premier type de pôle détecté et reprise de l'incrémentation ou de la décrémentation du compteur de transitions à partir de la valeur courant mémorisée ;

- si le premier type de pôle détecté n'est pas identique au dernier type de pôle détecté, levée d'un drapeau de vigilance ;

- abaissement du drapeau de vigilance lors de l'écriture de la valeur de remplacement.

Le ratio entre la durée caractéristique de la transition testée et la durée de révolution complète estimée sera une estimation d'autant plus correcte de l'angle caractéristique de la transition testée que les fluctuations de la vitesse de révolution seront faibles à l'échelle d'un tour. De préférence, on prévoit une procédure de test d'une condition de stabilité de vitesse angulaire de l'organe tournant par rapport à l'organe de référence autour de l'axe de révolution, comportant, pour au moins la transition testée et l'autre transition :

- un calcul de la différence entre les durées de révolution complète glissantes associées à la transition testée et à l'autre transition ;

- au moins une comparaison de ladite différence à un seuil fonction de la durée de révolution complète estimée, pour déterminer si la condition de stabilité de vitesse est réalisée ou non.

Suivant un mode de réalisation, on prévoit qu'au moins l'opération de calcul d'un angle caractéristique de la transition testée n'est réalisée ou exploitée que si la condition de stabilité de vitesse angulaire est réalisée. En pratique, la procédure de test d'une condition de stabilité de vitesse angulaire est réalisée pour chacune des transitions testées.

Pour déterminer les durées de révolution et les durées caractéristiques pour différentes transitions testées, on peut faire appel à deux horloges par transition testée, chacune déclenchée puis lue et remise à zéro lors des détections de transitions successives par le capteur.

Alternativement, et suivant un mode de réalisation préféré, le capteur est lié à au moins une horloge et une mémoire vive comportant au moins 2N emplacements de mémoire, le procédé comportant, pour chacune des transitions de la suite de transitions successives détectée par le capteur, la mémorisation dans un des emplacements de la mémoire vive d'un temps correspondant de l'horloge, chacune des durées déterminées étant calculée comme une différence temporelle entre deux des temps mémorisés. On n'a alors besoin pour le procédé que d'une horloge.

Suivant un mode de réalisation, on détermine à partir d'au moins deux angles caractéristiques de deux transitions testées ou d'une même transition testée, un sens de rotation relative entre l'organe tournant et l'organe de référence.

Suivant un mode de réalisation, le procédé comporte, pour chaque transition testée, une détermination d'au moins une deuxième durée caractéristique de la transition testée, égale au temps séparant la transition testée d'une deuxième autre transition de la suite de transition successives, la deuxième autre transition étant immédiatement adjacente à la transition testée dans la suite de transitions successives ou séparée de la transition testée par un nombre prédéterminé Q de transitions successives de la suite de transition successives, Q étant compris entre 1 et 2N-2, et étant différente de l'autre transition testée

Suivant un autre aspect de l'invention, celle-ci a trait à un dispositif de mesure pour instrumenter un ensemble comportant un organe tournant apte à tourner par rapport à un organe de référence autour d'un axe de révolution, le dispositif de mesure comportant :

-    un codeur annulaire multipolaire à N paires de pôles destiné à être fixé à l'organe tournant, chaque paire de pôle comportant un pôle de type Nord et un pôle de type Sud, les N paires de pôles formant sur un tour une alternance de pôles de type Nord et de pôles de type Sud, l'alternance de pôles de type Nord et de pôles de type Sud n'étant pas distribuée de façon régulière autour de l'axe de révolution ;

-    un capteur, par exemple optique ou de préférence magnétique, destiné à être fixé par rapport à l'organe de référence de manière à détecter une suite de transitions successives caractéristiques chacune d'un passage des pôles de l'alternance de pôle devant le capteur ; et

-    un circuit de mesure programmé pour exécuter le procédé tel que décrit précédemment.

De préférence, le capteur est apte à détecter le type Nord ou Sud d'un pôle de l'alternance de pôles en regard duquel se trouve le capteur. Il peut notamment s'agir d'un capteur à effet Hall permettant de distinguer des pôles magnétique Nord et Sud d'un codeur magnétique multipolaire.

Le dispositif comporte de préférence une horloge et une mémoire comportant au moins 2N emplacements pour mémoriser des temps d'horloge, chaque emplacement mémoire étant associé à l'une des 2N transitions successives entre deux pôles successifs du codeur.

Le dispositif de mesure est de préférence relié à un moteur d'entraînement de l'organe tournant ou à une commande d'un tel moteur d'entraînement de manière à lire un signal représentatif d'une direction de rotation du moteur, et à mémoriser l'information correspondante.

## BRÈVE DESCRIPTION DES FIGURES

D'autres caractéristiques et avantages de l'invention ressortiront à la lecture de la description qui suit, en référence aux figures annexées, qui illustrent :

[FIG. 1] la figure 1, un système tournant comportant un dispositif selon un mode de réalisation de l'invention ;

[FIG. 2] la figure 2, une vue schématique d'un codeur du dispositif de la figure 1 ;

[FIG. 3] la figure 3, un graphe déroulé de la distribution angulaire du codeur de la figure 2;

[FIG. 4] la figure 4, un graphe illustrant une distribution angulaire de transitions successives entre pôles du codeur de la figure 2, et l'incrémentation correspondante d'un compteur de transitions

[FIG. 5] la figure 5, un logigramme d'un programme mettant en oeuvre un procédé selon l'invention.

Pour plus de clarté, les éléments identiques ou similaires sont repérés par des signes de référence identiques sur l'ensemble des figures.

## DESCRIPTION DÉTAILLÉE DE MODES DE RÉALISATION

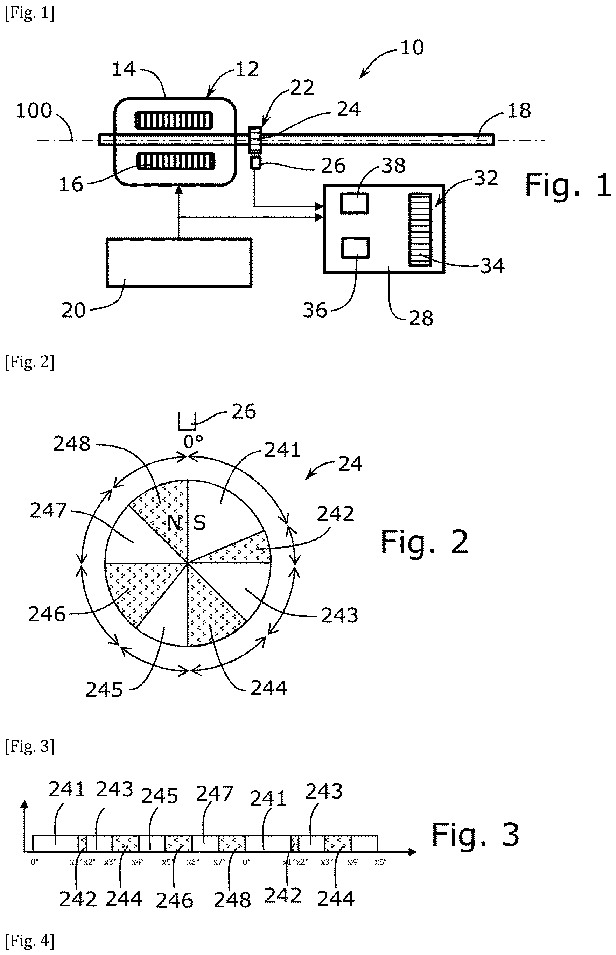

Sur la figure **1** est illustré de façon schématique un système tournant **10** comportant un moteur électrique **12**, dans le carter **14** duquel sont logés des enroulements statoriques **16** qui permettent d'entraîner un arbre moteur **18** autour d'un axe de référence **100** fixe par rapport au carter moteur **14.** Le moteur **12** peut être de tout type. Il est commandé par un circuit de commande **20** qui lance des ordres de marche et d'arrêt, les ordres de marche comportant le cas échéant une information de sens de rotation si le moteur **12** est bidirectionnel.

Dans la suite de l'exposé, on nommera l'arbre moteur **18** « organe tournant », et la partie fixe **14** du moteur « organe de référence ». Le système tournant est instrumenté par un dispositif de mesure **22** d'une position angulaire absolue ou d'une course de déplacement angulaire absolue de l'organe tournant **18** par rapport à l'organe de référence **14** autour de l'axe de révolution **100,** qui comporte un codeur annulaire multipolaire **24** fixé à l'organe tournant **18** et disposé en regard d'un capteur **26** fixe par rapport à l'organe de référence **14.** Le codeur **24** est ici de type magnétique et le capteur **26** est un capteur inductif, par exemple un capteur à effet hall, mais l'invention a vocation à s'appliquer à d'autres type de codeurs multipolaires et d'autres capteurs, fonctionnant par exemple sur un principe optique.

Par codeur multipolaire, on entend ici un codeur comportant N paires de pôles, N étant un nombre entier non nul, chaque paire de pôles comportant un pôle de type Nord (par exemple un pôle magnétique Nord ou un secteur angulaire ayant une première propriété optique) et un pôle de type Sud (par exemple un pôle magnétique Sud ou un secteur angulaire ayant une deuxième propriété optique distincte de la première propriété optique). Les N paires de pôles forment sur la circonférence de l'anneau une alternance de pôles de type Nord et de pôles de type, comme illustré sur la figure **2** pour N=4.

Le capteur **26** est positionné sur l'organe de référence **14** de façon à détecter les transitions entre pôles de type Nord et pôles de type Sud. De préférence, le capteur **26** est également apte à détecter le type Nord ou Sud du pôle en regard duquel il se trouve.

L'instrumentation du système comporte en outre un circuit de mesure **28.** Le circuit de mesure **28** est relié au capteur **26** pour lire les transitions détectées, et le cas échéant le type Nord ou Sud de chaque pôle du codeur **24** vu par le capteur **26.** Le circuit de mesure **28** est également relié au circuit de commande **26** du moteur **12** pour lire des informations représentatives des ordres de démarrage et d'arrêt du moteur **12,** et le cas échéant des ordres concernant la direction de rotation du moteur **12.** Le circuit de mesure **28** peut également être relié au circuit de commande **20** pour livrer au circuit de commande **20** des informations calculées par le circuit de mesure **28.**

Le circuit de mesure **28** peut comporter un circuit de mise en sommeil, apte à réduire la consommation du circuit de mesure **28** et notamment à cesser l'alimentation du capteur, après détection d'un ordre d'arrêt du moteur **12** ou après détection d'un arrêt de l'organe tournant **18,** et jusqu'à détection d'un ordre de démarrage du moteur **12.**

Le circuit de mesure **28** comporte une horloge **30,** une mémoire **32** comportant au moins 2N emplacements **34** pour mémoriser des temps de l'horloge **30** et un compteur de transitions **36** qu'il est possible d'incrémenter, de décrémenter ou de remettre à zéro. Le circuit de mesure **28** comporte également un processeur **38** pour effectuer des opérations logiques et algébriques sur les temps d'horloges et lire et écrire dans la mémoire **32** et le compteur de transitions **36.**

À chaque détection par le capteur **26** d'une transition entre deux pôles du codeur, et suivant la direction de rotation déterminée par le circuit de commande **20** du moteur, le circuit de mesure **28** est programmé pour d'une part incrémenter ou décrémenter le compteur de transitions **36** qui prend une valeur courante j, ou j est un entier relatif quelconque, et d'autre part mémoriser le temps d'horloge $T_j$ courant, de façon circulaire dans la mémoire **32** à 2N emplacements **34.** On dispose ainsi pour une suite d'au moins 2N transitions successives détectées, d'une suite correspondante d'au moins 2N instants successifs mémorisés $T_j$.

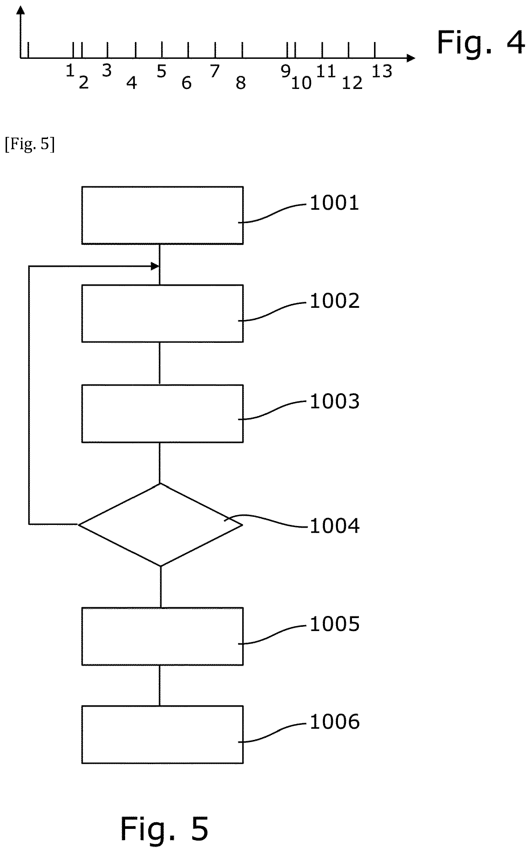

De façon remarquable, l'alternance de pôles de type Nord et de pôles de type Sud du codeur n'est pas distribuée de façon régulière autour de l'axe de révolution. À titre illustratif on a représenté de façon schématique sur la figure **2** un codeur **24** présentant huit pôles **241** à **248** et on a reporté sur la figure **3** sur une échelle linéaire d'angles un déroulé des pôles **241** à **248** du codeur **24** de la figure **2** sur plus d'un tour, et sur la figure **4** les incrémentations successives correspondantes du compteur de transitions **36** (notées ici arbitrairement de 1 à 13) en réponse aux transitions détectés par le capteur **26.** On distingue entre les transitions 1 et 2, puis 9 et 10, un pôle étroit **242** succédant, entre les transitions 8 et 9, à un pôle large et précédant, entre les transitions 2 et 3, un pôle de largeur moyenne. Cette irrégularité peut être une conséquence aléatoire d'un procédé de fabrication du codeur **24** dans lequel la largeur des pôles **241** à **248** n'est pas parfaitement maîtrisée. Elle peut également être, et de façon préférentielle, induite par une fabrication maîtrisée du codeur **24** avec des largeurs de pôles différentes.

Une conséquence de cette irrégularité est que le secteur angulaire couvrant un nombre entier P de pôles varie en fonction du premier pôle observé, lorsque P n'est pas un multiple de 2N, et notamment lorsque P est strictement inférieur à 2N. Il s'ensuit que le comptage de P transitions successives observées par le capteur ne permet pas à lui seul de calculer le débattement angulaire correspondant ou la vitesse moyenne pour parcourir ces P transitions, sauf si P est un multiple de 2N. Inversement, lorsque P est multiple de 2N, on sait que l'organe tournant a effectué un nombre entier de tour, et la vitesse moyenne que l'on peut calculer n'est pas entachée d'erreur.

Selon l'invention, on prévoit de mettre à profit ce constat en observant, pour chaque transition détectée par le capteur, l'intervalle de temps $D_j = T_j - T_{j-2N}$ séparant cette transition de la transition détectée d'ordre 2N précédente. On détermine ainsi par le calcul pour chaque transition détectée d'ordre j une durée $D_j$ de la révolution complète de l'organe tournant s'achevant avec cette transition. L'inverse $1/D_j$ de cette durée représente une vitesse moyenne de la révolution complète, exprimé en nombre de tours par unité de temps.

Si l'on fait l'hypothèse que la vitesse de révolution de l'organe tournant **18** varie peu entre deux instants d'observation donnés $T_i$ et $T_j$ correspondant à deux valeurs i et j du compteur de transition **36** suffisamment proches dans la série de transitions successives détectées, on peut considérer que le temps qui s'écoule entre les deux instants, rapporté à une durée d'une révolution complète estimée D de l'organe tournant est une mesure d'un secteur angulaire $\delta_{ji}$ du codeur **24** entre les deux transitions, qui est un angle caractéristique de la transition j.

$$\delta_{ji} \approx \frac{T_j - T_i}{D}$$

En pratique, on peut choisir comme durée de révolution estimée D la durée de révolution complète $D_j$ associée à l'observation de rang j, ou la durée de révolution complète $D_i$ associée à l'observation de rang i, ou une valeur moyenne calculée sur l'intervalle entre les observations i et j, par exemple :

$$D = \frac{D_j + D_i}{2}$$

ou

$$D = \frac{\sum_{k=i}^{k=j} D_k}{j - i + 1} = \frac{\sum_{k=i}^{k=j}(T_k - T_{k-2N})}{j - i + 1}$$

En pratique, on choisira i proche de j :

$$1 \le j - i \le 2N - 1$$

et de préférence :

$$1 \le j - i \le N - 1$$

et de façon particulièrement préférée :

$$j = i + 1$$

Pour valider l'hypothèse de stabilité de la vitesse de révolution de l'organe tournant, on peut effectuer un test sur les durées de révolution $D_j$ et $D_i$ ou sur toutes les durées $D_k$ pour l'indice k variant de i à j, en vue de déterminer si les variations observées sont faibles par rapport à D. On peut par un exemple valider si une condition exprimée de la façon suivante est réalisée :

$$\frac{\sum_{k=i+1}^{k=j}(D_k - D_{k-1})}{D.(j-i)} < \varepsilon$$

où $\varepsilon$ est un seuil prédéterminé faible, par exemple inférieur à $10^{-2}$.

Lorsque la condition est réalisée, on considère que la valeur $\delta_{ji}$ correspond bien à la valeur de l'angle entre les transitions i et j.

En répétant ce calcul pour 2N valeurs de j successives, on obtient une estimation des angles caractéristiques $\delta_{ji}$ de toutes les transitions sur un tour et l'on peut identifier la valeur de j ayant une signature particulière (par exemple la valeur la plus petite correspondant dans l'exemple de la figure **2** au pôle **242** occupant le secteur angulaire le moins grand, ou la valeur la plus grande correspondant au pôle **241** occupant le secteur angulaire le plus grand).

Cette signature correspond à une position connue d'un pôle ou d'une transition d'indexation du codeur. On peut alors vérifier si la valeur correspondante du compteur, modulo 2N (c'est-à-dire le reste de la division entière de la valeur contenue dans le compteur par 2N), correspond ou non au pôle ou à la transition indexée. En cas de décalage, on peut remplacer la valeur contenue dans le compteur par une valeur corrigée qui est une fonction du nombre de tour détectés par le compteur (le quotient de la division de la valeur courante du compteur par 2N) et d'une valeur prédéterminée attribuée à la singularité.

Alternativement, on peut, lors d'une étape préalable d'étalonnage, avoir mémorisé un angle spécifique $\Delta$ du pôle ou de l'alternance d'indexation (par exemple l'angle entre les deux transitions encadrant le pôle **242)** puis, lors du fonctionnement de l'installation, comparer chaque angle caractéristique $\delta_{ji}$ à cet angle spécifique.

Pour augmenter le niveau de confiance dans la reconnaissance du pôle ou de la transition d'indexation, on peut calculer plus d'un angle caractéristique de la transition. On peut par exemple identifier de façon unique la transition correspondant à l'incrément 9 sur la figure **4,** entre les pôles **241** et **242,** par les deux angles qui la sépare des deux transitions qui l'encadrent, à savoir l'angle $\Delta_{241}$ qui la sépare de la transition 8 et l'angle $\Delta_{242}$ qui la sépare de la transition 10, sachant que $\Delta_{241}$ est le secteur angulaire le plus petit entre deux transitions successives et $\Delta_{242}$ le secteur angulaire le plus grand. Lorsque le calcul des angles caractéristiques $\delta_{ji}$ livre deux valeurs successives $\delta_{j,j-1}$ et $\delta_{j+1,j}$ qui correspondent respectivement à $\Delta_{241}$ et $\Delta_{242}$, ou qui sont respectivement la valeur la plus petite et la valeur la plus grande des angles caractéristiques calculés sur un tour, on détermine que l'incrément j correspond à la transition entre les pôles **241** et **242**.

On constatera que le calcul de plusieurs angles caractéristiques d'une même transition permet non seulement de reconnaître avec un niveau de confiance plus élevé la transition d'indexation, mais également le sens de rotation de l'organe tournant.

On a supposé dans l'exposé précédent que l'horloge fournissait un temps précis par rapport aux événements observés. En pratique, l'horloge doit avoir un pouvoir de résolution temporelle f, exprimé en Hz, substantiellement supérieur à la fréquence de passage des transitions devant le capteur. Si $V_{Max}$ est la vitesse de révolution maximale délivrée par le moteur **12,** exprimée en rad/s :

$$f \gg \frac{2N}{2\pi}.V_{Max}$$

En pratique :

$$f > 10^2 \frac{2N}{2\pi}.V_{Max}$$

Sur la figure **5** est illustré un logigramme d'un programme mettant en oeuvre le procédé selon l'invention, dans un cas où j=i+1, c'est-à-dire dans le cas où les angles caractéristiques calculés sont les angles entre deux transitions successives du codeur **24.**

On suppose un état initial **1000** dans lequel le moteur est à l'arrêt, le compteur de transitions **36** conserve la dernière valeur connue d'une exécution précédente du programme, mais ne représente pas nécessairement avec exactitude la position réelle de l'organe tournant qui peut avoir très légèrement bougé depuis la dernière observation. De façon optionnelle, le circuit de mesure **28** peut également avoir mémorisé le type Nord ou Sud du dernier pôle détecté avant l'arrêt.

Au pas **1001,** un ordre de commande du moteur dans un sens donné est émis par le circuit de commande **20** et détecté par le circuit de mesure **28** qui mémorise le sens de rotation et réveille de capteur **26.** De façon optionnelle, on peut prévoir que le capteur lise le type Nord ou Sud du pôle qu'il détecte à son réveil, et que ce type soit comparé au type du dernier pôle détecté avant l'arrêt, afin de lever un drapeau de vigilance si les deux types diffèrent et de le baisser sinon. Le drapeau de vigilance levé signifie que l'on sait qu'il y a eu un décalage. Ce test peut être utile notamment si l'on sait que les changements de position de l'organe tournant à l'arrêt du moteur ne peuvent être que très faibles et inférieurs à la largeur angulaire du plus petit pôle du codeur. Dans cette hypothèse en effet, la position du drapeau de vigilance permet de savoir s'il y a ou non eu un décalage, et de décider en conséquence si les étapes suivantes du programme doivent ou non être exécutées.

Au pas **1002,** le capteur **26** détecte les transitions entre pôles successifs du codeur **24,** et le circuit de mesure **28** alimente la mémoire **34** avec les temps d'horloge $T_j$ correspondants et incrémente ou décrémente le compteur de transitions, suivant le sens de rotation préalablement mémorisé à l'étape **1001.** En variante, on peut prévoir que le sens de rotation ne soit pas transmis par le circuit de commande **20** au circuit de mesure **28,** et que deux compteurs distincts soient utilisés en parallèle, l'un incrémenté à chaque transition détectée et correspondant à l'hypothèse d'un premier sens de rotation et l'autre, décrémenté à chaque transition détectée, correspondant à l'hypothèse du sens de rotation opposé.

Au pas **1003,** après la détection d'au moins **2N** transitions successives, le processeur **38** calcule à chaque transition k le temps écoulé $D_k$ depuis la transition d'ordre 2N précédente.

Au pas **1004,** le processeur **38** effectue un test de stabilité de la vitesse de révolution de l'organe tournant et déterminant si l'inégalité suivante est réalisée :

$$\frac{\sum_{k=j-N+1}^{k=j}(D_k - D_{k-1})}{N.D_j} < \varepsilon$$

Si le test est positif, on effectue au pas **1005** les calculs d'angles caractéristiques $\delta_{k,k-1}$ pour les transitions k entre j-N et j et l'on identifie la transition L correspondant à la transition d'indexation.

Au pas **1006,** on corrige le compteur de transitions **36** en écrivant dans le compteur une valeur qui est égale à la somme du quotient de la valeur courante par 2N et de la valeur, comprise entre 1 et 2N, associée à la transition d'indexation. Le cas échéant, le drapeau de vigilance peut être abaissé. À partir de cette étape, on considère que le compteur de transitions **36** donne une information non erronée sur la course angulaire du codeur **24** et de l'organe tournant **18** par rapport à une position d'étalonnage.

Naturellement, les exemples représentés sur les figures et discutés cidessus ne sont donnés qu'à titre illustratif et non limitatif. Il est explicitement prévu que l'on puisse combiner entre eux les différents modes de réalisation illustrés pour en proposer d'autres.

## Revendications

1. Procédé de détection d'une position angulaire absolue ou d'une course de déplacement angulaire absolue d'un organe tournant (18) par rapport à un organe de référence (14) autour d'un axe de révolution (100), à l'aide d'un dispositif de mesure comportant un codeur annulaire multipolaire (24) à N paires de pôles fixé à l'organe tournant (18) et un capteur (26) fixe par rapport à l'organe de référence (14), chaque paire de pôle comportant un pôle de type Nord et un pôle de type Sud, les N paires de pôles formant sur un tour une alternance de pôles (241 à 248) de type Nord et de type Sud, l'alternance de pôles (241 à 248) n'étant pas distribuée de façon régulière autour de l'axe de révolution (100), le procédé comportant une détection par le capteur (24) d'une suite de transitions successives caractéristiques chacune d'un passage des pôles (241 à 248) de l'alternance de pôles devant le capteur, le procédé comportant l'opération suivante :

- pour plusieurs transitions, dites chacune transition testée, et de préférence toutes les transitions de la suite de transitions successives, une détermination d'au moins une durée caractéristique de la transition testée, égale au temps séparant la transition testée d'une autre transition de la suite de transition successives, l'autre transition étant immédiatement adjacente à la transition testée dans la suite de transitions successives ou séparée de la transition testée par un nombre prédéterminé Q de transitions successives de la suite de transition successives, Q étant compris entre 1 et 2N-2,

**caractérisé en ce que** le procédé comporte en outre les opérations suivantes :

- une détermination de plusieurs durées de révolution complète glissantes associées chacune à une transition extraite de la suite de transitions successives et égales chacune au temps séparant la transition extraite d'une transition d'ordre 2N précédente de la suite de transitions successives, et d'une durée de révolution complète estimée, fonction d'une ou plusieurs des durées de révolution complète glissantes,
- un calcul pour chaque transition testée d'au moins un angle caractéristique de la transition testée, proportionnel à un ratio entre la durée caractéristique de la transition testée et la durée de révolution complète estimée.

2. Procédé selon la revendication 1, **caractérisé en ce que** la durée de révolution complète estimée est égale soit à la durée de révolution complète glissante associée à la transition testée, à l'autre transition ou à une quelconque transition entre la transition testée et l'autre transition, soit à une moyenne calculée à partir d'au moins certaines des durées de révolution complète glissantes, de préférence une moyenne calculée à partir de plusieurs durées parmi les durées suivantes : la durée de révolution complète glissante associée à la transition testée, la durée de révolution complète glissante associée à l'autre transition, une ou plusieurs durées de révolution complète glissante associées à une ou plusieurs transitions séparant la transition testée de l'autre transition.

3. Procédé selon l'une quelconque des revendications précédentes, **caractérisé en ce qu'**il comporte une comparaison de l'angle caractéristique de la transition testée avec un angle spécifique d'indexation préalablement mémorisé ou avec un ou plusieurs autres angles caractéristiques d'une ou plusieurs autres transitions testées pour déterminer si la transition testée correspond à une transition d'indexation prédéterminée unique caractéristique de la distribution irrégulière de l'alternance de pôles (241 à 248) autour de l'axe de révolution (100).

4. Procédé selon la revendication 3, **caractérisé en ce qu'**il comporte les opérations suivantes :

- lors de la détection par le capteur de transitions successives caractéristiques des passages des pôles de l'alternance de pôle devant le capteur, incrémentation ou décrémentation d'au moins un compteur de transitions (36) en fonction des transitions détectées et, le cas échéant, d'une direction de rotation donnée de l'organe tournant.
- lorsque la transition testée correspond à la transition d'indexation, lecture d'une valeur courante du compteur de transitions (36), et écriture dans le compteur de transitions (36) d'une valeur de remplacement fonction de la valeur courante et d'un numéro d'indexation spécifique de la transition d'indexation.

5. Procédé selon la revendication 4 **caractérisé en ce qu'**il comporte les opérations suivantes :

- détection d'un ordre de mise en rotation de l'organe tournant dans une direction de rotation donnée,
- mémorisation de la direction de rotation donnée.

6. Procédé selon l'une quelconque des revendications 4 à 5, le capteur (26) étant apte à détecter le type d'un pôle (241 à 248) de l'alternance de pôles en regard duquel se trouve le capteur (26), le procédé étant **caractérisé en ce qu'**il comporte les opérations suivantes :

- lors d'un arrêt de l'organe tournant (18), mémorisation du dernier type de pôle détecté et de la valeur courante du compteur de transitions (36) ;
- lors d'une reprise de rotation de l'organe tournant (18), lecture du premier type de pôle détecté et reprise de l'incrémentation ou de la décrémentation du compteur de transitions (36) à partir de la valeur courant mémorisée ;
- si le premier type de pôle détecté n'est pas identique au dernier type de pôle détecté, levée d'un drapeau de vigilance ;
- abaissement du drapeau de vigilance lors de l'écriture de la valeur de remplacement.

7. Procédé selon l'une quelconque des revendications précédentes, **caractérisé en ce qu'**il comporte une procédure de test d'une condition de stabilité de vitesse angulaire de l'organe tournant par rapport à l'organe de référence autour de l'axe de révolution, comportant, pour au moins la transition testée et l'autre transition :

- un calcul de la différence entre les durées de révolution complète glissantes associées à la transition testée et à l'autre transition ;
- au moins une comparaison de ladite différence à un seuil fonction de la durée de révolution complète estimée, pour déterminer si la condition de stabilité de vitesse est réalisée ou non.

8. Procédé selon la revendication 7, **caractérisé en ce qu'**au moins l'opération de calcul d'un angle caractéristique de la transition testée n'est réalisée ou exploitée que si la condition de stabilité de vitesse angulaire est réalisée.

9. Procédé selon l'une quelconque des revendications 7 à 8, **caractérisé en ce que** la procédure de test d'une condition de stabilité de vitesse angulaire est réalisée pour chacune des transitions testées.

10. Procédé selon l'une quelconque des revendications précédentes, **caractérisé en ce que** le capteur (26) est lié à au moins une horloge (36) et une mémoire vive (32) comportant au moins 2N emplacements de mémoire (34), le procédé comportant, pour chacune des transitions de la suite de transitions successives détectée par le capteur (26), la mémorisation dans un des emplacements (34) de la mémoire vive (32) d'un temps correspondant de l'horloge (36), chacune des durées déterminées étant calculée comme une différence temporelle entre deux des temps mémorisés.

11. Procédé selon l'une quelconque des revendications précédentes, **caractérisé en ce que** qu'il comporte, à partir d'au moins deux angles caractéristiques de deux transitions testées ou d'une même transition testée, une détermination d'un sens de rotation relative entre l'organe tournant et l'organe de référence.

12. Procédé selon l'une quelconque des revendications précédentes, **caractérisé en ce que** qu'il comporte pour chaque transition testée, une détermination d'au moins une deuxième durée caractéristique de la transition testée, égale au temps séparant la transition testée d'une deuxième autre transition de la suite de transition successives, la deuxième autre transition étant immédiatement adjacente à la transition testée dans la suite de transitions successives ou séparée de la transition testée par un nombre prédéterminé Q de transitions successives de la suite de transition successives, Q étant compris entre 1 et 2N-2, et étant différente de l'autre transition testée.

13. Dispositif de mesure pour instrumenter un ensemble (10) comportant un organe tournant (18) apte à tourner par rapport à un organe de référence (14) autour d'un axe de révolution (100), le dispositif de mesure comportant :

- un codeur annulaire multipolaire (24) à N paires de pôles destiné à être fixé à l'organe tournant, chaque paire de pôle comportant un pôle de type Nord et un pôle de type Sud, les N paires de pôles formant sur un tour une alternance de pôles de type Nord et de pôles de type Sud, l'alternance de pôles de type Nord et de pôles de type Sud n'étant pas distribuée de façon régulière autour de l'axe de révolution (100) ;
- un capteur (26), par exemple optique ou de préférence magnétique, destiné à être fixé par rapport à l'organe de référence (26) de manière à détecter une suite de transitions successives caractéristiques chacune d'un passage des pôles de l'alternance de pôle devant le capteur (26) ;

**caractérisé en ce qu'**il comporte un circuit de mesure (28) programmé pour exécuter le procédé selon l'une quelconque des revendications précédentes.

14. Dispositif de mesure selon la revendication 13, **caractérisé en ce que** le capteur (26) est apte à détecter le type Nord ou Sud d'un pôle (241 à 248) de l'alternance de pôles en regard duquel se trouve le capteur (26).

**Patentansprüche**

1. Verfahren zur Erkennung einer absoluten Winkelposition oder eines absoluten Winkelverlagerungshubes eines drehenden Organs (18) gegenüber einem Referenzorgan (14) um eine Drehachse (100) mithilfe einer Messvorrichtung, die einen am drehenden Organ (18) befestigten mehrpoligen ringförmigen Drehgeber (24) mit N Polpaaren und einen relativ zum Referenzorgan (14) festen Sensor (26) umfasst, wobei jedes Polpaar einen Pol vom Typ Nord und einen Pol vom Typ Süd umfasst und die N Polpaare bei einer Umdrehung eine Wechselfolge von Polen (241 bis 248) vom Typ Nord und vom Typ Süd bilden, wobei die Wechselfolge von Polen (241 bis 248) nicht regelmäßig um die Drehachse (100) verteilt ist und das Verfahren eine Erkennung einer Folge aufeinanderfolgender Übergänge umfasst, die jeweils charakteristisch für einen Durchgang der Pole (241 bis 248) der Wechselfolge von Polen vor dem Sensor ist, wobei das Verfahren den folgenden Vorgang umfasst:

- für mehrere Übergänge, jeweils geprüfter Übergang genannt, und vorzugsweise alle Übergänge der Folge aufeinanderfolgender Übergänge Bestimmen mindestens einer charakteristischen Dauer des geprüften Übergangs, die gleich der Zeit ist, die den geprüften Übergang von einem anderen Übergang der Folge aufeinanderfolgender Übergänge, wobei der andere Übergang unmittelbar benachbart zum geprüften Übergang der Folge aufeinanderfolgender Übergänge oder vom geprüften Übergang durch eine vorbestimmte Anzahl Q aufeinanderfolgender Übergänge der Folge aufeinanderfolgender Übergänge getrennt ist, wobei Q zwischen 1 und 2N-2 liegt,

**dadurch gekennzeichnet, dass** das Verfahren außerdem die folgenden Vorgänge umfasst:

- Bestimmen mehrerer gleitender Dauern einer vollständigen Umdrehung, die jeweils zu einem Übergang gehören, der aus der Folge aufeinanderfolgender Übergänge extrahiert wird, und die jeweils gleich der Zeit sind, die den Übergang, der von einem vorhergehenden Übergang der Größenordnung 2N der Folge aufeinanderfolgender Übergänge extrahiert wurde, trennt und einer geschätzten Dauer einer vollständigen Umdrehung in Abhängigkeit von einer oder mehreren der gleitenden Dauern einer vollständigen Umdrehung,
- Berechnen mindestens eines charakteristischen Winkels des geprüften Übergangs für jeden geprüften Übergang proportional zu einem Verhältnis zwischen der charakteristischen Dauer des geprüften Übergangs und der geschätzten Dauer der vollständigen Umdrehung.

2. Verfahren nach Anspruch 1, **dadurch gekennzeichnet, dass** die geschätzte Dauer einer vollständigen Umdrehung entweder gleich der gleitenden Dauer einer vollständigen Umdrehung, die zu dem geprüften Übergang, dem anderen Übergang oder einem beliebigen Übergang zwischen dem geprüften Übergang und dem anderen Übergang gehört, oder gleich einem Mittelwert ist, der auf Grundlage mindestens bestimmter gleitender Dauern einer vollständigen Umdrehung, vorzugsweise einem Mittelwert, der auf Grundlage mehrerer Dauern unter den folgenden Dauern berechnet wird: die zum geprüften Übergang gehörende gleitende Dauer einer vollständigen Umdrehung, die zum anderen Übergang gehörende gleitende Dauer der vollständigen Umdrehung, eine oder mehrere gleitende Dauern einer vollständigen Umdrehung, die zu einer oder mehreren Übergängen gehören, die den geprüften Übergang vom anderen Übergang trennen.

3. Verfahren nach einem der vorhergehenden Ansprüche, **dadurch gekennzeichnet, dass** es einen Vergleich des charakteristischen Winkel des geprüften Übergangs mit einem bestimmten zuvor gespeicherten Indizierungswinkel oder mit einem oder mehreren anderen Winkeln, die für einen oder mehrere geprüfte Übergänge charakteristisch sind, um zu ermitteln, ob der geprüfte Übergang einem vorbestimmten eindeutigen Übergang entspricht, der für die unregelmäßige Verteilung der Wechselfolge von Polen (241 bis 248) um die Drehachse (100) charakteristisch ist.

4. Verfahren nach Anspruch 3, **dadurch gekennzeichnet, dass** es die folgenden Vorgänge umfasst:

- bei Erkennung aufeinanderfolgender Übergänge, die für Poldurchgänge der Polwechselfolge vor dem Sensor charakteristisch sind, Inkrementieren oder Dekrementieren mindestens eines Übergangszählers (36) in Abhängigkeit von erkannten Übergängen und gegebenenfalls einer gegebenen Drehrichtung des drehenden Organs.
- wenn der geprüfte Übergang dem Indizierungsübergang entspricht, Ablesen eines aktuellen Wertes des Übergangszählers (36) und Schreiben eines Ersatzwertes in den Übergangszähler (36) in Abhängigkeit vom aktuellen Wert und von einer bestimmten Indizierungszahl des Indizierungsübergangs.

5. Verfahren nach Anspruch 4, **dadurch gekennzeichnet, dass** es die folgenden Vorgänge umfasst:

- Erkennen einer Reihenfolge der Versetzung in Drehung des drehenden Organs in einer gegebenen Drehrichtung,
- Speichern der gegebenen Drehrichtung.

6. Verfahren nach einem der Ansprüche 4 bis 5, wobei der Sensor (26) fähig ist, den Typ eines Pols (241 bis 248) der Wechselfolge von Polen zu erkennen, dem gegenüber sich der Sensor (26) befindet, wobei das Verfahren **dadurch gekennzeichnet ist, dass** es die folgenden Vorgänge umfasst:

- bei einem Anhalten des drehenden Organs (18) Speichern des letzten erkannten Poltyps und des aktuellen Wertes des Übergangszählers (36);
- bei einem Wiederaufnehmen der Drehung des drehenden Organs (18) Ablesen des ersten erkannten Poltyps und Wiederaufnehmen der Inkrementierung oder Dekrementierung des Übergangszählers (36) ab dem gespeicherten aktuellen Wert;
- wenn der erste erkannte Poltyp mit dem letzten erkannten Poltyp nicht identisch ist, Heben einer Warnflagge;
- Senken der Warnflagge beim Schreiben des Ersatzwertes.

7. Verfahren nach einem der vorhergehenden Ansprüche, **dadurch gekennzeichnet, dass** es eine Prozedur zum Prüfen einer Stabilitätsbedingung der Winkelgeschwindigkeit des drehenden Organs bezüglich eines Referenzorgans um die Drehachse umfasst, das mindestens für den geprüften Übergang und den anderen Übergang umfasst:

- Berechnen der Differenz zwischen der zu dem geprüften Übergang und dem anderen Übergang gehörenden gleitenden Dauer der vollständigen Umdrehung;
- mindestens einen Vergleich der Differenz mit einem Schwellenwert in Abhängigkeit von der geschätzten Dauer der vollständigen Umdrehung, um zu ermitteln, ob die Stabilitätsbedingung der Geschwindigkeit erfüllt ist oder nicht.

8. Verfahren nach Anspruch 7, **dadurch gekennzeichnet, dass** mindestens der Vorgang des Berechnens eines charakteristischen Winkels des geprüften Übergangs nur erfolgt oder durchgeführt wird, wenn die Stabilitätsbedingung der Winkelgeschwindigkeit erfüllt ist.

9. Verfahren nach einem der Ansprüche 7 bis 8, **dadurch gekennzeichnet, dass** die Prozedur des Prüfens einer Stabilitätsbedingung der Winkelgeschwindigkeit für jeden der geprüften Übergänge erfolgt.

10. Verfahren nach einem der vorhergehenden Ansprüche, **dadurch gekennzeichnet, dass** der Sensor (26) mindestens mit einen Taktgeber (36) und einem Direktzugriffsspeicher (32) verbunden ist, der mindestens 2N Speicherplätze (34) umfasst, wobei das Verfahren für jeden der Übergänge der Folge aufeinanderfolgender Übergänge, die vom Sensor (26) erkannt werden, Speichern einer dem Taktgeber (36) entsprechenden Zeit auf einem der Speicherplätze (34) des Direktzugriffsspeichers (32) umfasst, wobei jede der ermittelten Dauern als Zeitdifferenz zwischen zweien der gespeicherten Zeiten berechnet wird.

11. Verfahren nach einem der vorhergehenden Ansprüche, **dadurch gekennzeichnet, dass** es Ermitteln einer relativen Drehrichtung zwischen dem drehenden Organ und dem Referenzorgan auf Grundlage mindestens zweier charakteristischer Winkel von zwei geprüften Übergängen oder eines gleichen geprüften Übergangs umfasst.

12. Verfahren nach einem der vorhergehenden Ansprüche, **dadurch gekennzeichnet, dass** es für jeden geprüften Übergang Ermitteln mindestens einer zweiten charakteristischen Dauer des geprüften Übergangs umfasst, die gleich der Zeit ist, die den geprüften Übergang von einem zweiten anderen Übergang der Folge aufeinanderfolgender Übergänge trennt, wobei der zweite andere Übergang unmittelbar benachbart zu dem geprüften Übergang der Folge aufeinanderfolgender Übergänge ist oder vom geprüften Übergang durch eine vorbestimmte Anzahl Q aufeinanderfolgender Übergänge der Folge aufeinanderfolgender Übergänge getrennt ist, wobei Q zwischen 1 und 2N-2 liegt, und sich vom anderen geprüften Übergang unterscheidet.

13. Messvorrichtung zum Instrumentieren einer Anordnung (10), die ein drehendes Organ (18) umfasst, das sich bezüglich eines Referenzorgans (14) um eine Drehachse (100) dreht, wobei die Messvorrichtung umfasst:

- einen mehrpoligen ringförmigen Drehgeber (24) mit N Polpaaren, der dazu bestimmt ist, am drehenden Organ (18) befestigt zu werden, wobei jedes Polpaar einen Pol vom Typ Nord und einen Pol vom Typ Süd umfasst und die N Polpaare bei einer Umdrehung eine Wechselfolge von Polen vom Typ Nord und vom Typ Süd bilden, wobei die Wechselfolge von Polen vom Typ Nord und vom Typ Süd nicht regelmäßig um die Drehachse (100) verteilt ist;
- einen Sensor (26), beispielsweise optisch oder vorzugsweise magnetisch, der dazu bestimmt ist, relativ zum Referenzorgan (26) so befestigt zu werden, dass er eine Folge aufeinanderfolgender Übergänge erkennt, die jeweils für einen Poldurchgang der Polwechselfolge vor dem Sensor (26) charakteristisch sind;

**dadurch gekennzeichnet, dass** sie einen Messschaltkreis 28) umfasst, der dazu programmiert ist, das Verfahren nach einem der vorhergehenden Ansprüche durchzuführen.

14. Messvorrichtung nach Anspruch 13, **dadurch gekennzeichnet, dass** der Sensor (26) fähig ist, den Typ Nord oder Süd eines Pols (241 bis 248) der Polwechselfolge, der gegenüber sich der Sensor (26) befindet, zu erkennen.

## Claims

1. Method for detecting an absolute angular position or an absolute angular travel of a rotating member (18) with respect to a reference member (14) about an axis of rotation (100), using a measuring device comprising a multipole annular encoder (24) comprising N pairs of poles that is fastened to the rotating member (18) and a sensor (26) that is fixed with respect to the reference member (14), each pair of poles comprising a pole of north type and a pole of south type, the N pairs of poles forming, over one revolution, an alternation of poles (241 to 248) of north type and of south type, the alternation of poles (241 to 248) not being distributed regularly around the axis of rotation (100), the method comprising a detection, by the sensor (24), of a sequence of successive transitions each characteristic of a passage of the poles (241 to 248) of the alternation of poles in front of the sensor, the method comprising the following operation:

   - for a plurality of transitions, each of which is referred to as a tested transition, and preferably for all the transitions of the sequence of successive transitions, determining at least one characteristic time of the tested transition, equal to the time separating the tested transition from another transition of the sequence of successive transitions, the other transition being immediately adjacent to the tested transition in the sequence of successive transitions or being separated from the tested transition by a predetermined number Q of successive transitions of the sequence of successive transitions, Q being comprised between 1 and 2N-2,

   **characterized in that** the method further comprises the following operations:

   - determining a plurality of moving complete rotation times each associated with one transition extracted from the sequence of successive transitions and each equal to the time separating the extracted transition from a preceding transition of order 2N of the sequence of successive transitions, and an estimated complete rotation time, which is dependent on one or more of the moving complete rotation times,
   - computing for each tested transition at least one characteristic angle of the tested transition, which angle is proportional to a ratio between the characteristic time of the tested transition and the estimated complete rotation time.

2. Method according to Claim 1, **characterized in that** the estimated complete rotation time is equal either to the moving complete rotation time associated with the tested transition, with the other transition or with any transition between the tested transition and the other transition, or to an average computed from at least certain of the moving complete rotation times, preferably an average computed from a plurality of times among the following times: the moving complete rotation time associated with the tested transition, the moving complete rotation time associated with the other transition, one or more moving complete rotation times associated with one or more transitions separating the tested transition from the other transition.

3. Method according to either of the preceding claims, **characterized in that** it comprises comparing the characteristic angle of the tested transition with a specific indexing angle stored beforehand in memory or with one or a plurality of other angles characteristic of one or more other tested transitions, with a view to determining whether the tested transition corresponds to a unique predetermined indexing transition that is characteristic of the irregular distribution of the alternation of poles (241 to 248) around the axis of rotation (100).

4. Method according to Claim 3, **characterized in that** it comprises the following operations:

   - on detection by the sensor of successive transitions characteristic of the passages of the poles of the alternation of poles in front of the sensor, incrementing or decrementing at least one transition counter (36) depending on the detected transitions and, where appropriate, on a given direction of rotation of the rotating member; and
   - when the tested transition corresponds to the indexing transition, reading a current value of the transition counter (36), and writing to the transition counter (36) a replacement value dependent on the current value and on a specific indexing number of the indexing transition.

5. Method according to Claim 4, **characterized in that** it comprises the following operations:

   - detecting a command to rotate the rotating member in a given direction of rotation;
   - storing the given direction of rotation in memory.

6. Method according to either one of Claims 4 and 5, the sensor (26) being able to detect the type of a pole (241 to 248) of the alternation of poles that is located facing the sensor (26), the method being **characterized in that** it comprises the following operations:

- on stoppage of the rotating member (18), storing in memory the last type of pole detected and the current value of the transition counter (36);
- on restart of rotation of the rotating member (18), reading the first type of pole detected and restarting the incrementation or the decrementation of the transition counter (36) from the current value stored in memory;
- if the first type of pole detected is not identical to the last type of pole detected, raising a vigilance flag;
- lowering the vigilance flag when the replacement value is written.

7. Method according to any one of the preceding claims, **characterized in that** it comprises a procedure for testing an angular speed stability condition regarding the stability of the angular speed of the rotating member with respect to the reference member about the axis of rotation, comprising, for at least the tested transition and the other transition:

- computing the difference between the moving complete rotation times associated with the tested transition and with the other transition;
- at least one comparison of said difference to a threshold dependent on the estimated complete rotation time, with a view to determining whether the speed stability condition is met or not.

8. Method according to Claim 7, **characterized in that** at least the operation of computing a characteristic angle of the tested transition is carried out or exploited only if the angular speed stability condition is met.

9. Method according to either of Claims 7 and 8, **characterized in that** the procedure for testing an angular speed stability condition is carried out for each of the tested transitions.

10. Method according to any one of the preceding claims, **characterized in that** the sensor (26) is connected to at least one clock (36) and one random-access memory (32) comprising at least 2N memory locations (34), the method comprising, for each of the transitions of the sequence of successive transitions detected by the sensor (26), storage, in one of the locations (34) of the random-access memory (32), of a corresponding time of the clock (36), each of the determined times being computed by computing a time difference between two of the stored times.

11. Method according to any one of the preceding claims, **characterized in that** it comprises, on the basis of at least two characteristic angles of two tested transitions or of the same tested transition, determining a direction of relative rotation between the rotating member and the reference member.

12. Method according to any one of the preceding claims, **characterized in that** it comprises, for each tested transition, determining at least one second characteristic time of the tested transition, equal to the time separating the tested transition from a second other transition of the sequence of successive transitions, the second other transition being immediately adjacent to the tested transition in the sequence of successive transitions or separated from the tested transition by a predetermined number Q of successive transitions of the sequence of successive transitions, Q being comprised between 1 and 2N-2, and being different from the other tested transition.

13. Measuring device for instrumenting an assembly (10) comprising a rotating member (18) that is able to rotate with respect to a reference member (14) about an axis of rotation (100), the measuring device comprising:

- a multipole annular encoder (24) comprising N pairs of poles that is intended to be fastened to the rotating member, each pair of poles comprising a pole of north type and a pole of south type, the N pairs of poles forming, on one rotation, an alternation of poles of north type and of poles of south type, the alternation of poles of north type and of poles of south type not being distributed regularly around the axis of rotation (100);
- a sensor (26), for example an optical or preferably magnetic sensor, intended to be fixed with respect to the reference member (26) so as to detect a sequence of successive transitions each characteristic of a passage of the poles of the alternation of poles in front of the sensor (26);

**characterized in that** it comprises a measuring circuit (28) programmed to execute the method according to any one of the preceding claims.

14. Measuring device according to Claim 13, **characterized in that** the sensor (26) is able to detect the north or south type of a pole (241 to 248) of the alternation of poles that is located facing the sensor (26).

[Fig. 1]

Fig. 1

[Fig. 2]

Fig. 2

[Fig. 3]

Fig. 3

[Fig. 4]

Fig. 4

[Fig. 5]

Fig. 5

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- DE 19835091 C1

- DE 10017542 A1